# FASCICULE DE BREVET EUROPEEN

(11) **EP 2 010 363 B1**
(45) Date de publication et mention de la délivrance du brevet: **09.06.2010**
(21) Numéro de dépôt: 07731940.8
(22) Date de dépôt: 25.04.2007
(51) Int. Cl.: B29B 11/16, B29C 70/30, B29C 70/34, B29C 70/24, B29C 70/54, F02K 9/84, B29C 70/48

(54) **PROCEDE DE REALISATION DE STRATE FIBREUSE POUR LA FABRICATION D'UNE PREFORME DE PIECE COMPOSITE**
VERFAHREN ZUR HERSTELLUNG EINER FASERSCHICHT FÜR DIE HERSTELLUNG EINES VORFORMLINGS EINES VERBUNDTEILS
METHOD OF PRODUCING A FIBROUS LAYER FOR THE MANUFACTURE OF A PREFORM OF A COMPOSITE PART

(30) Priorité: 26.04.2006 FR 0651474
(43) Date de publication de la demande: 07.01.2009
(73) Titulaire: Snecma Propulsion Solide, 33187 Le Haillan Cedex (FR)
(72) Inventeur: LALANDE, Joëlle, 33200 Bordeaux (FR); BALLION, Frédéric, 33000 Bordeaux (FR); FELTIN, Dirk, 01219 Dreden (DE)
(74) Mandataire: Desormiere, Pierre-Louis
(86) Numéro de dépôt international: PCT/FR2007/051167
(87) Numéro de publication internationale: WO 2007/125249

(56) Documents cités:
- EP-A- 1 584 462
- EP-A2- 0 337 648
- EP-A2- 0 721 835
- WO-A-03/100148
- US-A- 5 399 309
- US-A1- 2004 074 589

## Description

### Arrière plan de l'invention

L'invention concerne la réalisation de strates fibreuses destinées à la fabrication de préformes fibreuses pour pièces composites comprenant un renfort fibreux et présentant une forme de révolution et de surface non développable comme par exemple des surfaces en anneau ou tronc de sphère conformément à la revendication 1.

Un domaine particulier d'application de l'invention est la réalisation de renforts fibreux utilisés pour la fabrication d'armatures composites de butées flexibles. Les butées flexibles sont couramment utilisées dans le domaine de la propulsion pour former des articulations reliant une tuyère au corps d'un propulseur. Ces butées sont formées en alternant des armatures composites rigides ayant une forme en anneau de sphère avec des couches en matériau élastiquement déformable tel qu'un élastomère.

Un procédé actuellement utilisé pour former de telles armatures composites, décrit dans le document FR A 2 675 072, consiste à draper et mouler des strates de tissu en carbone préimprégné par une résine (par exemple une résine époxy). Plus précisément, le procédé comprend les étapes suivantes:
- découpe, dans un tissu de fibres de carbone ou de verre préimprégné, de strates en forme de secteurs annulaires ayant une forme approchée de développée de tronc de cône,
- drapage des strates de tissu préimprégné suivant un motif en rosette sur un moule mâle ayant une surface en forme d'anneau sphérique correspondant à la surface interne de l'armature sphérique à réaliser, compactage des strates sous vide au moyen d'une membrane, mise en place d'un moule femelle ayant une surface en forme d'anneau sphérique correspondant à la surface externe de l'armature à réaliser,
- polymérisation sous presse de l'ensemble, et démoulage de l'armature.

On obtient ainsi une pièce rigide à renfort fibreux offrant une meilleure résistance face aux sollicitations mécaniques.

Cependant, le procédé ci-dessus est très délicat à mettre en oeuvre.

Le drapage de strates de fibres pour former le renfort fibreux est une opération manuelle qui s'effectue directement sur un support de mise en forme et qui ne permet pas un contrôle précis de l'orientation et de la quantité des fibres en tout point du renfort. Le placement du moule femelle peut entraîner un glissement des strates et la formation de plis.

Cette technique n'offre pas, par conséquent, une bonne reproductibilité entre les pièces qui peuvent alors présenter des caractéristiques mécaniques différentes, en particulier vis-à-vis du taux de fibres et de leur orientation.

Dans le cas d'une butée flexible lamifiée, il est important que toutes les armatures de la butée présentent des formes et des caractéristiques mécaniques similaires pour un bon comportement de la butée.

Par ailleurs, les strates sont formées avec des fibres préimprégnées qui présentent une moins grande souplesse que des fibres sèches, ce qui rend encore plus difficile la conformation des strates à la forme d'une pièce de révolution non développable.

Il existe bien sûr d'autres types de pièces composites (ex. carter de moteur) qui présentent des formes de révolution et de surface non développable et qui comprennent un renfort fibreux dont les fibres sont orientées en fonction des efforts mécaniques de manière à accroître la résistance mécanique de la pièce. Toutefois, de même que pour l'armature de butée flexible, il n'existe pas de procédé permettant de réaliser de façon systématique des couches fibreuses présentant une quantité et une orientation de fibres constantes permettant de former des renforts fibreux ayant des formes de révolution non développable avec des caractéristiques géométriques homogènes.

Par ailleurs, certains types de pièces ont en outre besoin d'être renforcées localement. A cet effet, le renfort fibreux doit présenter à des endroits déterminés des épaisseurs de fibres plus importantes. La réalisation de couches fibreuses avec des portions de fibres plus épaisses et aptes à se déformer pour épouser des formes de révolution non développable devient encore plus difficile notamment en ce qui concerne le contrôle de l'orientation des fibres et le niveau de reproductibilité entre les couches.

### Objet et description succincte de l'invention

La présente invention a pour but de remédier aux inconvénients des procédés de l'art antérieur en proposant un procédé permettant de réaliser des strates fibreuses aptes à former des préformes ou renforts fibreux ayant des formes de révolution et de surface non développable et dans lesquelles la quantité et l'orientation des fibres peuvent être contrôlées de façon précise et reproductible.

Ce but est atteint grâce à procédé de réalisation d'une strate fibreuse destinée à former une préforme pour une pièce de révolution et de surface non développable selon la revendication 1.

Grâce au procédé de l'invention, la strate fibreuse destinée à former une préforme ayant une forme de révolution de surface non développable est réalisée à plat entre deux canevas. Par conséquent, l'orientation des fibres peut être contrôlée de façon précise et permettre la réalisation de pièces particulièrement bien adaptées aux sollicitations mécaniques auxquelles elles doivent être soumises. La strate fibreuse selon l'invention est réalisée de préférence en utilisant une machine à broder automatique pour placer les fibres entre les deux canevas. Ainsi, on peut automatiser le placement des fibres et former des strates fibreuses identiques notamment en ce qui concerne l'orientation et la quantité des fibres utilisées.

Selon un aspect de l'invention, des fibres supplémentaires sont ajoutées pour combler les espaces libres présents entre les fibres disposées entre les deux canevas, les fibres supplémentaires étant fixées aux fibres adjacentes par couture. On assure ainsi un taux de fibres constant sur toute la strate fibreuse permettant d'obtenir des préformes ou renforts fibreux ayant des caractéristiques géométriques homogènes.

Les fibres utilisées peuvent être notamment des fibres de carbone ou des fibres de verre.

Un autre aspect de l'invention concerne également un procédé de fabrication d'un renfort fibreux pour armature de butée flexible comprenant la formation d'une préforme alternant au moins deux strates fibreuses, procédé dans lequel, la première strate est réalisée conformément au procédé de réalisation d'une strate fibreuse destinée à former une pièce de révolution de surface non développable décrit précédemment. La deuxième strate est réalisée en disposant sur la première couche, maintenue en forme sur un outillage sphérique, une strate de fibres orientées perpendiculairement aux fibres de la première couche.

Ainsi, le procédé de fabrication de strate fibreuse de l'invention permet ici la fabrication d'un renfort fibreux pour une armature de butée flexible particulièrement bien adapté aux exigences mécaniques requises pour l'armature. En effet, l'armature doit présenter une bonne résistance suivant deux directions perpendiculaires, une correspondant à l'axe de l'armature et l'autre perpendiculaire à cet axe. A cet effet, le renfort de l'armature est formé en alternant des strates dont les fibres sont orientées successivement dans l'une ou l'autre de ces deux directions. Grâce au procédé de l'invention, la strate la plus difficile à réaliser, à savoir la strate dont les fibres sont orientées suivant l'axe de l'armature, peut être réalisée à plat entre les deux canevas, ce qui permet de contrôler l'orientation et la quantité des fibres de façon précise et reproductible pour chaque strate et d'obtenir un renfort fibreux homogène et adapté aux sollicitations mécaniques. La strate ainsi réalisée peut être facilement mise en place sur un outillage sphérique tout en conservant l'orientation des fibres. On peut alors réaliser un renfort fibreux sec (i.e. sans fibres préimprégnées) qui présente déjà la forme de l'armature à réaliser, à savoir une forme de révolution ayant une surface non développable.

Selon un aspect de l'invention, la deuxième strate est réalisée par bobinage filamentaire sur la première strate.

Une fois le renfort fibreux réalisé, il est placé dans un moule dans lequel est injecté sous pression une résine thermodurcissable, la polymérisation de la résine étant ensuite réalisée par traitement thermique. On obtient ainsi une armature composite rigide qui comprend un renfort fibreux structurellement adapté pour résister aux efforts mécaniques que doit subir l'armature et qui présente une porosité quasi inexistante.

Un autre aspect de l'invention a encore pour objet un procédé de fabrication de butée flexible consistant à former une structure lamifiée comprenant une pluralité d'armatures composites rigides intercalées avec des couches en matériau élastiquement déformable, chaque armature étant réalisée conformément au procédé de fabrication d'une armature décrit précédemment.

Selon un aspect particulier, le procédé de fabrication de butée flexible comprend les étapes consistant à:
- réaliser plusieurs renforts fibreux de taille croissante conformément au procédé décrit précédemment,
- maintenir les renforts les uns dans les autres avec des intercalaires entre chaque armature, lesdits intercalaires définissant l'épaisseur des couches de matériau élastiquement déformable,
- injecter sous pression dans les renforts une résine thermodurcissable,
- appliquer un traitement thermique pour polymériser la résine dans chaque renfort de manière à former une pluralité d'armatures composites rigides,
- retirer les intercalaires, et
- injecter ou couler un matériau élastique dans les espaces présents entre les armatures composites rigides pour former entre elles des couches de matériau élastique.

Cette mise en oeuvre du procédé permet de réaliser l'injection et la polymérisation de la résine simultanément dans les renforts fibreux et de procéder ensuite à la formation des couches de matériau élastique entre chaque armature ainsi formée.

Un autre aspect de l'invention concerne en outre un procédé de fabrication d'une pièce composite de type carter comprenant la formation d'un renfort fibreux ou préforme composé d'au moins une strate de fibres qui est réalisée conformément au procédé de réalisation d'une strate fibreuse destinée à former une préforme de pièce de révolution et de surface non développable décrit précédemment. La strate de fibres est formée de fibres orientées suivant deux directions différentes.

Selon un aspect de l'invention, une ou plusieurs portions d'épaississement sont formées à des endroits déterminés sur chaque strate de fibres, lesdites portions étant réalisées en répétant le placement de fibres aux endroits déterminés sur la strate. Ainsi, il est possible de fabriquer des pièces comportant des renforts locaux qui sont directement réalisés sur la strate fibreuse et dont on peut facilement contrôler l'épaisseur et l'orientation des fibres, et ce de manière reproductible pour chaque strate.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en coupe d'une partie arrière d'un propulseur équipée d'une butée flexible,
- la figure 2 est une vue schématique de dessus montrant la réalisation d'une strate fibreuse conformément à un mode de réalisation de l'invention,
- la figure 3 est une vue agrandie en perspective d'une partie (repère III) de la figure 2 montrant le placement et la couture de fibres par une machine à broder automatique,
- la figure 4 est une vue agrandie d'une partie (repère IV) de la strate de la figure 2 sur laquelle sont réalisés le placement et la couture de fibres supplémentaires par une machine à broder automatique,
- la figure 5 est une vue en demi coupe, suivant le repère V, de la strate fibreuse de la figure 2 montrant la réalisation d'une couture circulaire,
- la figure 6 est une vue en demi coupe, suivant le repère V, de la strate fibreuse de la figure 1 montrant le retrait de la strate des canevas,
- la figure 7 est une vue schématique de dessus montrant la strate fibreuse de la figure 2 après ajout de fibres supplémentaires et retrait des canevas,
- la figure 8 est une vue schématique en perspective d'un outillage de mise en forme utilisé pour la fabrication d'un renfort fibreux conformément à un mode de réalisation de l'invention,
- la figure 9 est une vue schématique en perspective de l'outillage de la figure 8 sur lequel est disposé la strate fibreuse de la figure 7,
- la figure 10 est une vue schématique de détail montrant le positionnement de barrettes de picots dans l'outillage de la figure 9,
- la figure 11 est une vue schématique en perspective d'une installation de bobinage filamentaire,
- la figure 12 est une vue schématique en perspective de l'outillage de la figure 9 comprenant en outre, sur la strate fibreuse, une strate de bobinage filamentaire,
- la figure 13 montre un renfort fibreux formé d'une superposition de strates alternant des strates fibreuses de la figure 7 et des strates de bobinage filamentaire,
- la figure 14A est une vue en perspective montrant l'assemblage utilisé pour l'injection de résine dans un renfort fibreux,
- la figure 14B est une vue schématique partielle en coupe montrant l'injection de résine dans un renfort fibreux,
- la figure 15 est une photographie illustrant un exemple de réalisation d'une armature composite de butée flexible conformément à l'invention,
- la figure 16 est une vue de dessus montrant le placement de fibres suivant deux orientations distinctes conformément à un autre mode de réalisation de l'invention,
- les figures 17A, 17B, 18A, 18B et 19 sont des vues schématiques montrant la réalisation d'une strate fibreuse ayant des fibres suivant deux orientations distinctes conformément à un autre mode de réalisation de l'invention,
- la figure 20 est une vue schématique en perspective d'une couche fibreuse comprenant des portions de renforts conformément à encore un autre mode de réalisation de l'invention.

### Description détaillée des modes de réalisation de l'invention

Le procédé de réalisation de strate fibreuse de la présente invention peut être utilisé d'une manière générale pour la fabrication de tout type de préforme de pièce présentant une forme de révolution et dont la surface n'est pas développable.

Comme expliqué plus loin en détail, ce procédé permet de réaliser au départ sur des canevas une strate fibreuse à plat qui pourra par la suite s'adapter à la forme de la pièce de révolution et de surface non développable. Cette strate peut être utilisée seule ou faire partie d'un empilement de plusieurs strates pour former la préforme ou le renfort fibreux de la pièce à fabriquer.

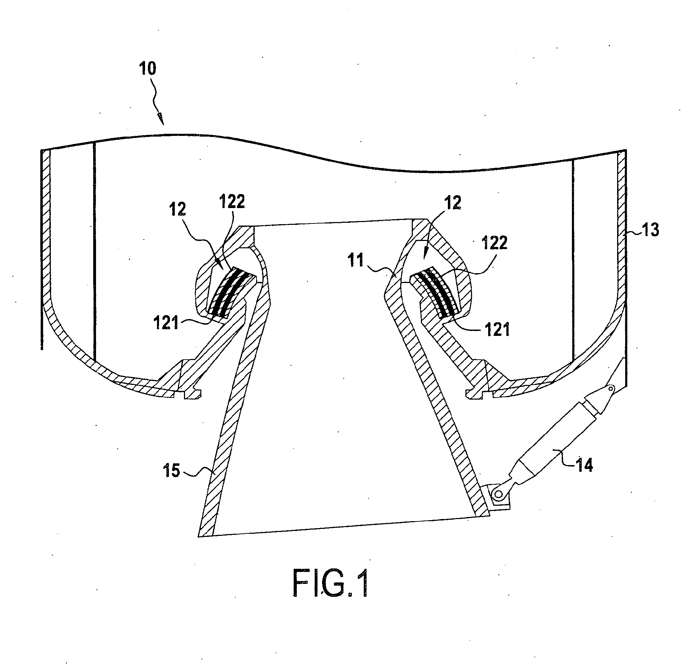

Dans un premier exemple de mise en oeuvre, le procédé de l'invention est utilisé dans la fabrication d'armatures composites de butée flexible. Comme illustré sur la figure 1, il est courant d'articuler une tuyère 11 d'un propulseur ou moteur-fusée 10 au moyen d'une butée flexible 12 comprenant une structure lamifiée constituée d'une alternance de couches de matériau élastiquement déformable 121 (par exemple en élastomère) et d'armatures composites rigides 122 présentant une forme en tronc de sphère. La butée 12 forme ainsi une liaison flexible entre la tuyère 11 et le corps 13 du propulseur de sorte que la tuyère peut être orientée au moyen d'un vérin 14 disposé entre le corps 13 du propulseur et le divergent 15.

La fabrication de l'armature consiste tout d'abord à réaliser un renfort fibreux constitué d'un empilement alternant des strates ayant des fibres orientées suivant une première direction correspondant à l'axe de l'armature et appelées "strates à 0°" avec des strates suivant une seconde direction perpendiculaire à l'axe de l'armature et aux fibres des strates à 0° et appelées "strates à 90°".

Les fibres utilisées pour réaliser les strates peuvent être notamment des fibres de verre ou de carbone suivant les performances et les coûts recherchés.

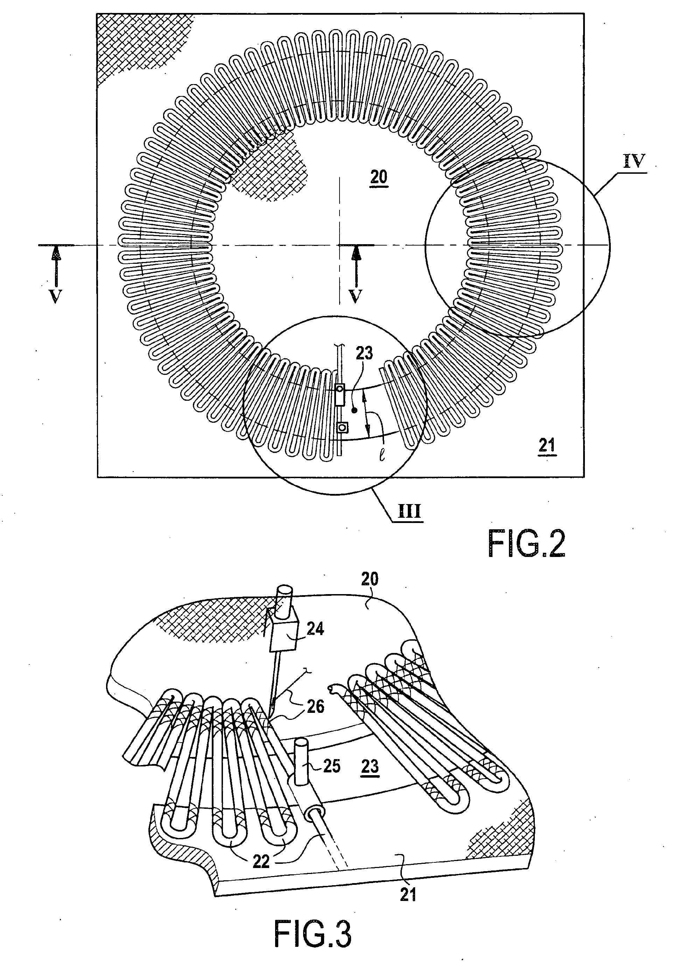

Les strates à 0° sont réalisées conformément au procédé de l'invention. Comme illustré sur la figure 2, la réalisation d'une strate à 0° se fait à partir de deux canevas 20 et 21 définissant un espace annulaire 23. Les canevas 20 et 21 délimitent respectivement la périphérie interne et externe de l'espace annulaire dont la largeur l est choisie légèrement supérieure aux dimensions nécessaires pour la strate à 0°.

Des fibres 22 sont disposées radialement entre les deux canevas de manière à remplir au mieux l'espace annulaire. Les fibres 22 sont disposées en utilisant la technologie de placement TFP (pour "Tailored Fibre Placement"). Cette technologie consiste à placer et fixer par couture des fibres à des endroits précis sur un support (canevas) au moyen d'une machine à broder automatique.

Toutefois, dans la présente invention, la technologie TFP est utilisée d'une manière différente. En effet, comme décrit par exemple dans le document US 2004/0074589, la technologie TFP est utilisée pour placer et coudre des fibres sur un support qui fait partie intégrante de la strate. De façon différente, dans la présente invention, on utilise des supports (canevas) uniquement pour définir la forme et les dimensions de la strate fibreuse à réaliser. Les supports ne se retrouvent pas dans la strate fibreuse finale. Si on utilise la technologie TFP habituelle, la strate fibreuse brodée sur le support présente une trop grande rigidité et ne peut pas être déformée pour épouser une forme tridimensionnelle de révolution et de surface non développable.

Plus précisément et comme illustré sur la figure 3, la machine délivre les fibres à partir d'une bobine (non représentée) contenant par exemple des stratifils (ou "rovings") de verre et les positionne au moyen d'un guide 25 dans l'espace annulaire 23. Pour maintenir les fibres ainsi placées, la machine comprend une tête de couture 24 qui coud les fibres au niveau de leurs extrémités sur les canevas 20 et 21 avec un fil 26 très fin, par exemple en polyéthylène ou polyester. Le placement et la couture des fibres sont programmés dans la commande numérique de la machine.

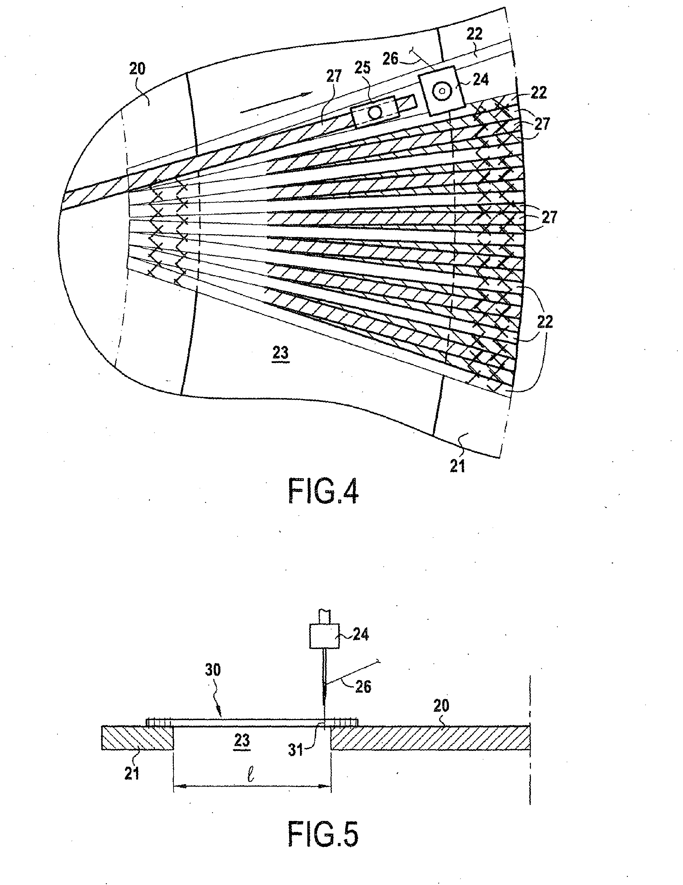

De par la forme annulaire de l'espace 23 et le placement radial des fibres dans celui-ci, il subsiste des espaces entre les fibres placées par la machine qui sont plus importants au fur et à mesure que l'on se rapproche de la périphérie externe de l'espace annulaire. Pour conserver un taux de fibres identique en tout point de la strate, on ajoute des fibres supplémentaires 27 de longueur variable dans les espaces présents entre les fibres 22 comme illustré sur la figure 4. Dans ce cas, la machine à broder automatique est programmée pour combler les espaces libres entre les fibres 22 en plaçant les fibres supplémentaires 27 dans ces espaces et en les cousant aux fibres adjacentes.

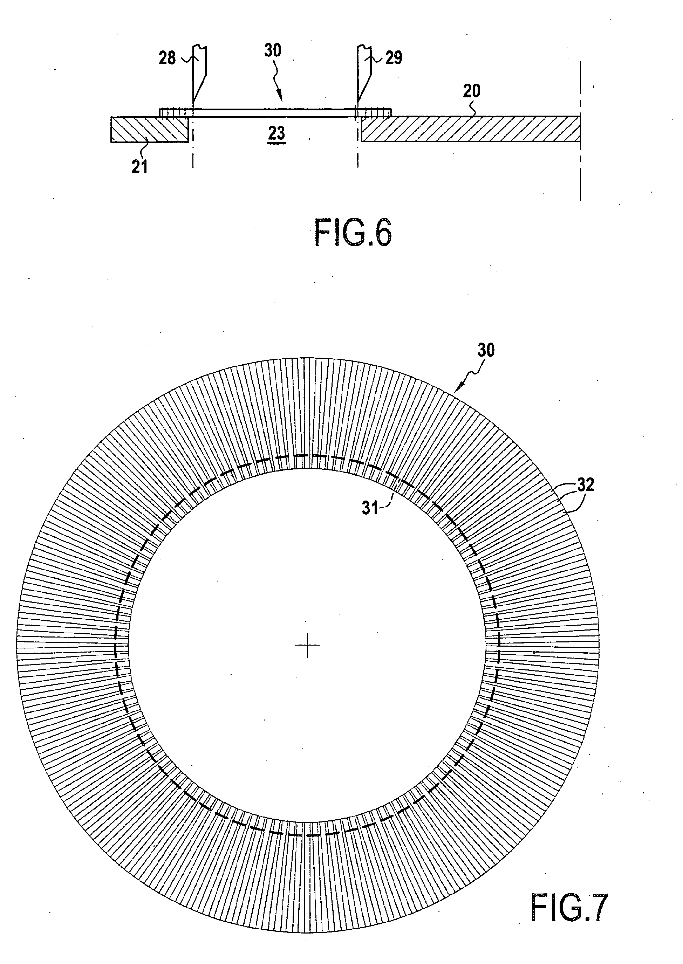

Une fois tous les espaces comblés, l'espace annulaire 23 est rempli par une strate 30 contenant un taux de fibres constant en tout point. On réalise alors une couture circulaire 31 (figure 5) au voisinage de la périphérie interne de l'espace annulaire pour maintenir les fibres avant le retrait de la strate fibreuse 30 des canevas qui peut être réalisé, par exemple, en découpant la strate 30 le long des périphéries interne et externe de l'espace annulaire 23 en utilisant des outils de coupe 28 et 29 (ex. couteaux, bistouris électriques, jets d'eau sous pressions, lasers, etc.) (figure 6).

La figure 7 montre la strate fibreuse 30 après le retrait des canevas. On obtient alors une strate fibreuse dont les fibres 32 sont maintenues entre elles par la couture circulaire 31 tout en conservant une grande souplesse permettant de la conformer facilement sur un outillage de mise en forme.

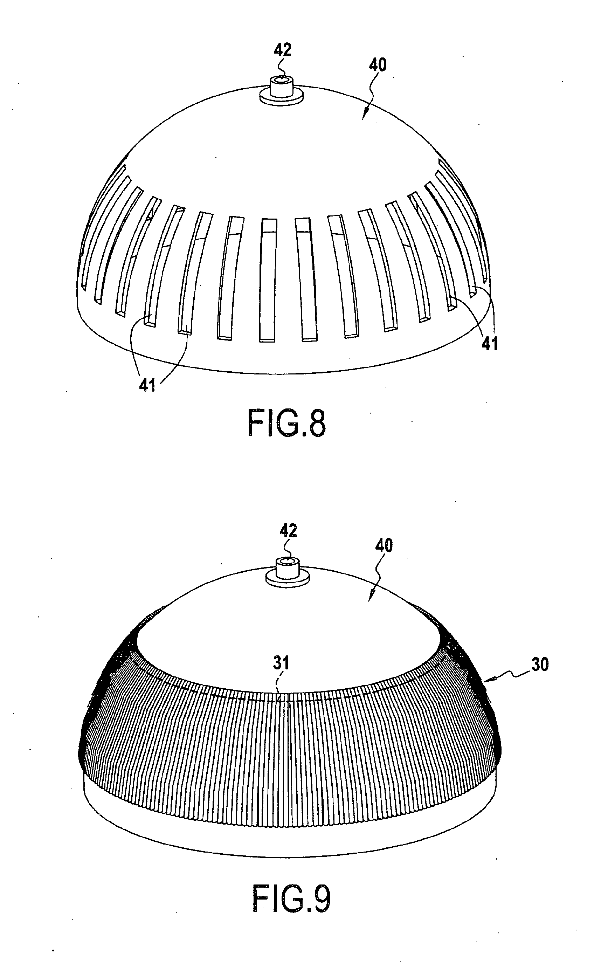

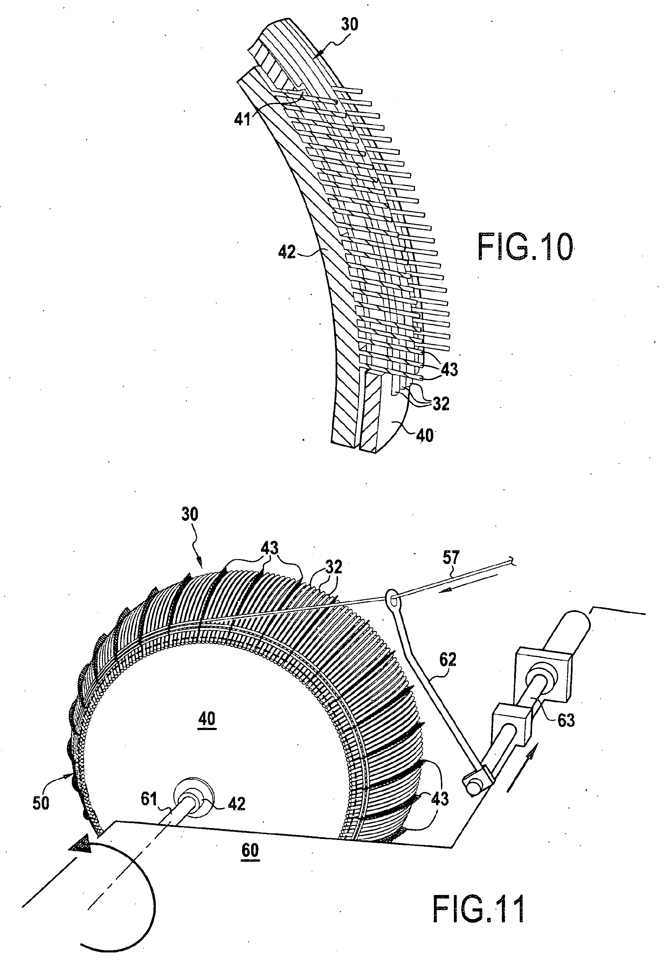

La figure 8 illustre un exemple d'un tel outillage qui peut être utilisé pour réaliser un empilement alternant des strates à 0° et à 90°. L'outillage 40 présente une forme hémisphérique comportant des fentes 41 pour permettre le passage de picots servant à la réalisation des strates à 90°. La figure 9 montre la strate fibreuse 30 lorsqu'elle est positionnée (i.e. mise en forme) sur l'outillage 40. Puisque les fibres 32 sont relativement libres du côté de la périphérie externe de la strate 30, cette dernière s'adapte parfaitement à la forme sphérique de l'outillage 40. On positionne ensuite dans chaque fente 41 de l'outillage une barrette 42 de support de picots 43 (figure 10).

Une strate 50 à 90° est réalisée directement sur la couche à 0° constituée de la strate fibreuse 30 par bobinage filamentaire (figure 11). A cet effet, le sommet 42 de l'outillage 40 est fixé sur un mandrin 61 d'une machine à bobiner 60. De cette façon, la machine 60 entraîne l'outillage 40 en rotation tout en délivrant en continu un fil 57 au moyen d'un passe-fils 62 monté sur un bras 63 qui est décalé au fur et à mesure du bobinage de manière à former des boucles successives sur la strate 30 maintenues entre les picots 43. Le fil 57 est constitué de préférence du même matériau (ex. fibres de verre ou de carbone) que celui composant les fibres 32 de la strate fibreuse 30.

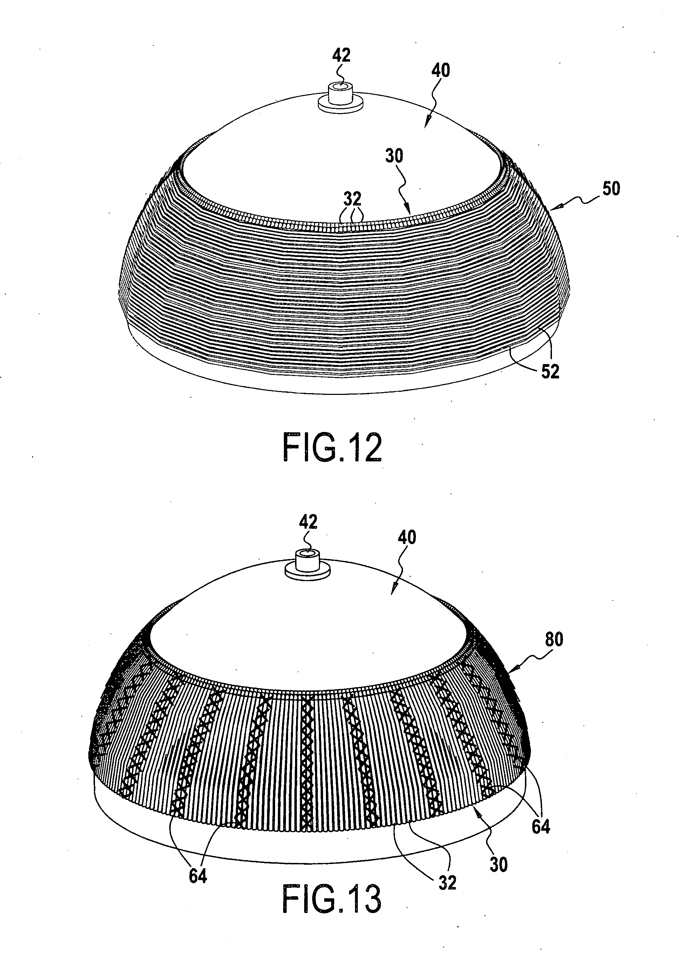

Lorsque le bobinage est terminé, la strate fibreuse 30 à 0° est entièrement recouverte par une strate 50 à 90° (figure 12), c'est-à-dire une strate dont les fibres 52 sont orientées perpendiculairement aux fibres 32 de la strate sous-jacente 30.

Le renfort fibreux ou la préforme de l'armature de butée flexible est ainsi réalisé en alternant sur l'outillage 40 des strates fibreuses 30 à 0° avec des strates 50 à 90° réalisées par bobinage. Chaque strate à 0° est réalisée suivant le procédé décrit précédemment en augmentant éventuellement à chaque fois légèrement la largeur de la couche 30 afin de tenir compte de l'augmentation de volume dans l'empilement.

A titre d'exemple, pour une armature d'épaisseur de 3 mm ayant un taux de fibres volumique de 50%, on réalise l'empilement suivant:
- 1 strate à 0° par placement TFP d'épaisseur de 0,35mm,
- 1 strate à 90° par bobinage filamentaire d'épaisseur de 0,53 mm,
- 1 strate à 0° par placement TFP d'épaisseur de 0,35mm,
- 1 strate à 90° par bobinage filamentaire d'épaisseur de 0,53 mm,
- 1 strate à 0° par placement TFP d'épaisseur de 0,35mm,
- 1 strate à 90° par bobinage filamentaire d'épaisseur de 0,53 mm,
- 1 strate à 0° par placement TFP d'épaisseur de 0,35mm,

Une fois l'empilement réalisé (figure 13), on dispose d'un renfort fibreux 80 composé de fibres sèches orientées alternativement suivant deux directions perpendiculaires correspondant ici au sens des sollicitations mécaniques auxquelles sera soumise la butée.

Les strates à 0° et 90° présentes dans l'empilement peuvent être liées en elles par l'intermédiaire de fils 64 traversant les strates dans le sens de leur épaisseur (sens Z) (figure 13). Ces liaisons inter-couches peuvent être réalisées en utilisant les fentes 41 de l'outillage comme passage de couture pour les fils 64. Les fils 64 peuvent être par exemple en PET (polyéthylène téréphtalate) ou en carbone.

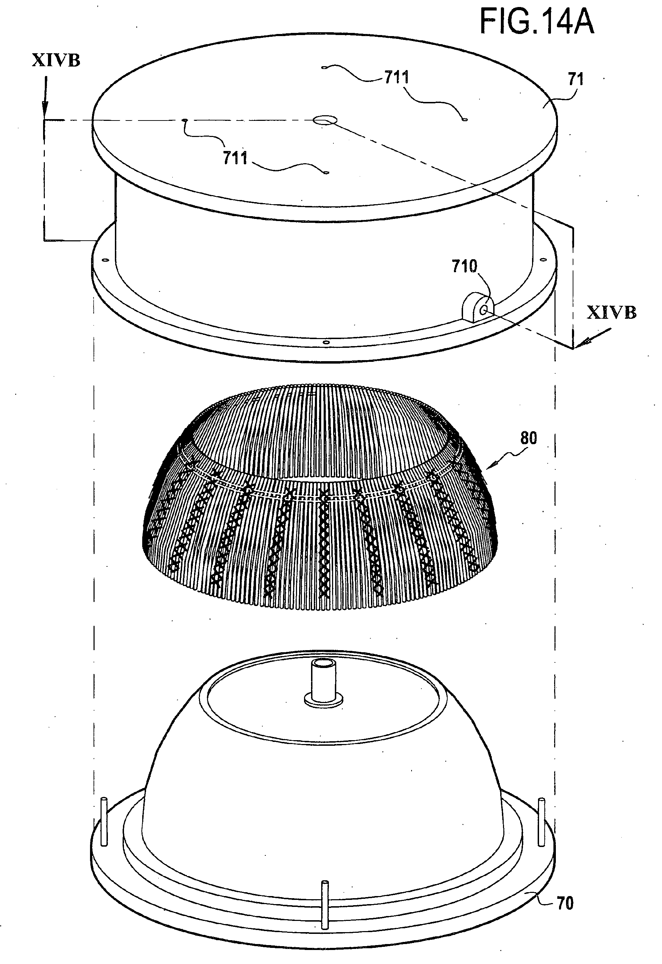

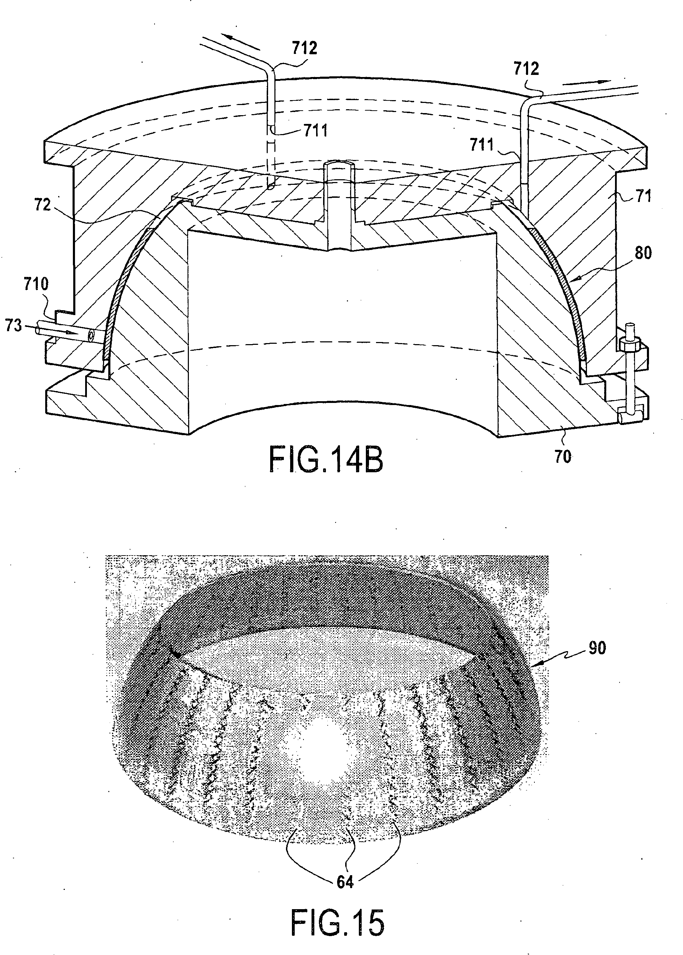

On procède ensuite au moulage de la pièce en imprégnant le renfort 80 avec une résine thermodurcissable que l'on polymérise par traitement thermique. On utilise à cet effet le procédé bien connu de moulage par transfert dit RTM ("Resin Transfert Moulding"). Conformément au procédé RTM, on place le renfort fibreux 80 entre un moule 70 et un contre-moule 71 (figure 14A), le renfort étant d'abord positionné sur le moule 70. Une fois assemblés entre eux (figure 14B), le moule 70 et le contre-moule 71 définissent un espace interne 72 comprenant le renfort 80 et dans lequel est injectée une résine thermodurcissable 73 via un orifice d'alimentation 710 ménagé sur la partie inférieure du contre-moule 71. Le contre-moule 71 comprend en outre des orifices 711 qui sont reliés à des conduits d'évacuation 712 maintenus sous pression. Cette configuration permet l'établissement d'un gradient de pression entre la partie inférieure du renfort où la résine est injectée et la partie supérieur du renfort située à proximité des orifices 711. De cette manière, la résine thermodurcissable 73 injectée sensiblement au niveau de la partie inférieure du renfort 80 va imprégner progressivement l'ensemble du renfort en circulant dans l'espace 72 jusqu'aux orifices 711 par lesquels le surplus est évacué.

La résine utilisée peut être, par exemple, une résine époxyde de classe de température 180 °C (température maximale supportée sans perte de caractéristiques). Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Elle peut éventuellement subir un cycle de post-cuisson pour améliorer ses caractéristiques thermomécaniques (augmentation de la température de transition vitreuse), comme par exemple un cycle de 2 heures à 180 °C. Au final, la pièce est détourée pour enlever l'excès de résine et les chanfreins sont usinés. Aucun autre usinage n'est nécessaire puisque, la pièce étant moulée, elle respecte les cotes exigées.

Comme illustrée sur la figure 15, on obtient une armature composite 90 présentant une forme de tronc de sphère.

La butée flexible est réalisée en formant une structure lamifiée alternant de telles armatures composites avec des couches de matériau élastiquement déformable (par exemple un élastomère).

La butée peut être réalisée en empilant des armatures composites de taille croissante et en interposant entre chaque armature une couche de matériau élastiquement déformable obtenue par drapage d'une feuille d'élastomère non vulcanisé. Le nombre d'armatures et de couches de matériau élastique composant la butée flexible est déterminé en fonction des efforts auxquels cette dernière devra résister. A titre d'exemple, une butée flexible peut comprendre 7 armatures avec 6 couches de matériau élastomère, chacune interposée entre deux armatures successives. L'ensemble armatures composites/couches de matériau élastomère est ensuite soumis à un cycle thermique (ex. dans une étuve à 150 °C) afin de vulcaniser l'élastomère composant les couches de matériau élastique.

Selon un mode de réalisation particulier de butée flexible, on réalise une série (par exemple 7) de renforts fibreux gigognes (i.e. de taille croissante ou décroissante) suivant le procédé décrit précédemment. On maintient les renforts les uns dans les autres avec des intercalaires métalliques entre chaque renfort correspondant à l'épaisseur des couches de matériau élastiquement déformable. On injecte et on polymérise la résine dans tous les renforts suivant le procédé RTM. On retire les intercalaires et on place les armatures sur des moules permettant de maintenir un espace entre chaque armatures. On injecte/coule alors le matériau élastomère dans les espaces ménagés entre les armatures.

Les fils 64 réalisant des liaisons inter-couches dans chaque armature (figure 15) permettent d'établir une conductivité thermique entre deux armatures, ce qui facilite l'apport de chaleur dans la couche de matériau élastiquement déformable entre deux armatures. Dans le cas par exemple de couches élastiques constituées de caoutchouc, la présence des fils 64 en augmentant la conductivité thermique entre les armatures améliore la vulcanisation de celui-ci.

Le procédé de réalisation de strate fibreuse de la présente invention n'est évidemment pas limité à la seule fabrication d'armatures comme décrit précédemment. Il peut être utilisé pour la fabrication de tout type de pièce présentant une forme de révolution et dont la surface n'est pas développable.

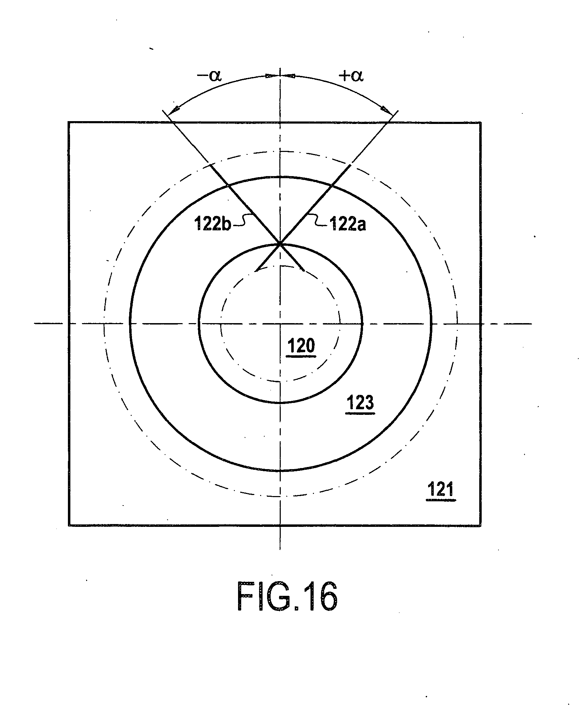

La figure 16 montre une autre mise en oeuvre du procédé de l'invention destinée à la fabrication d'une pièce annulaire tel qu'un carter. Dans cette mise en oeuvre, la strate fibreuse est constituée de plusieurs séries de fibres 122a et 122b, par exemple des fibres de verre ou de carbone, qui sont respectivement placées suivant deux orientations différentes correspondant aux directions des efforts mécaniques (ex. tension et compression) auxquels la pièce doit être soumise. Ce placement de fibres suivant deux orientations permet de conférer à la pièce résultante une résistance vis-à-vis de sollicitations mécaniques ayant des directions différentes.

Comme expliqué précédemment, la couche fibreuse est réalisée à partir de deux canevas 120 et 121 définissant un espace annulaire 123. Les canevas 120 et 121 délimitent respectivement la périphérie interne et externe de l'espace annulaire dont la largeur est choisie légèrement supérieure aux dimensions nécessaires pour la strate.

Les fibres 122a et 122b sont disposées en utilisant la technologie de placement TFP, c'est-à-dire en programmant la machine à broder automatique pour qu'elle place et couse les fibres 122a et 122b sur les canevas suivant respectivement un angle α et un angle -α (figure 16). Les angles α et -α peuvent correspondre par exemple respectivement à +45° et -45°. La mise en oeuvre de la machine à broder automatique est la même que celle décrite en relation avec la figure 3, le placement et la couture des fibres suivant des angles α et -α sont programmés dans la commande numérique de la machine.

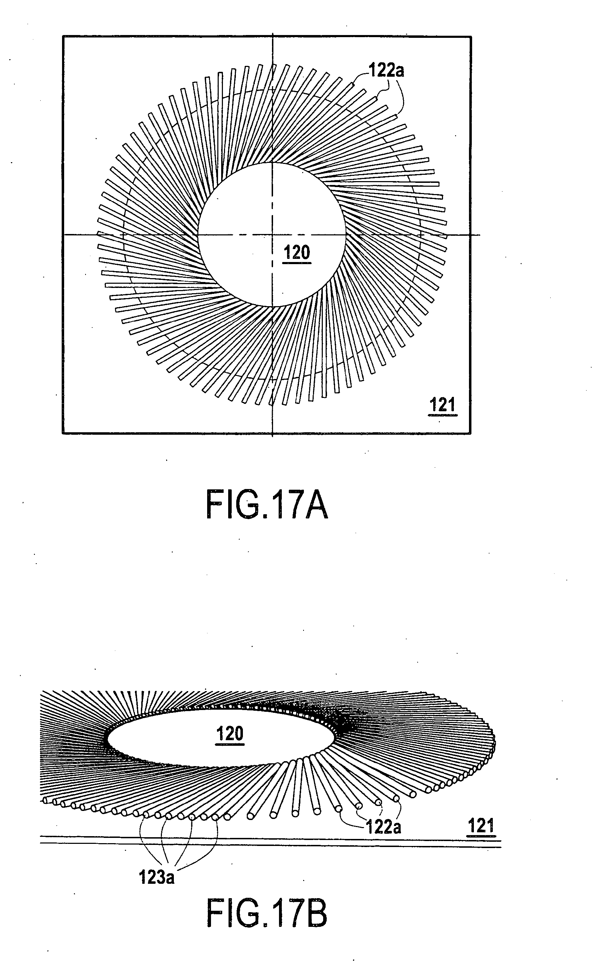

Concrètement, comme représentée sur la figure 17A, la machine dispose par exemple dans l'espace annulaire 123 une première série de fibres 122a suivant l'angle α. Comme pour la couche fibreuse 30 décrite précédemment, on peut combler les espaces subsistant entre les fibres 122a en plaçant avec la machine à broder des fibres supplémentaires 123a dans ces espaces (figure 17B), la machine fixant ces fibres supplémentaires aux fibres adjacentes par couture. Le taux de fibres est alors sensiblement constant en tout point.

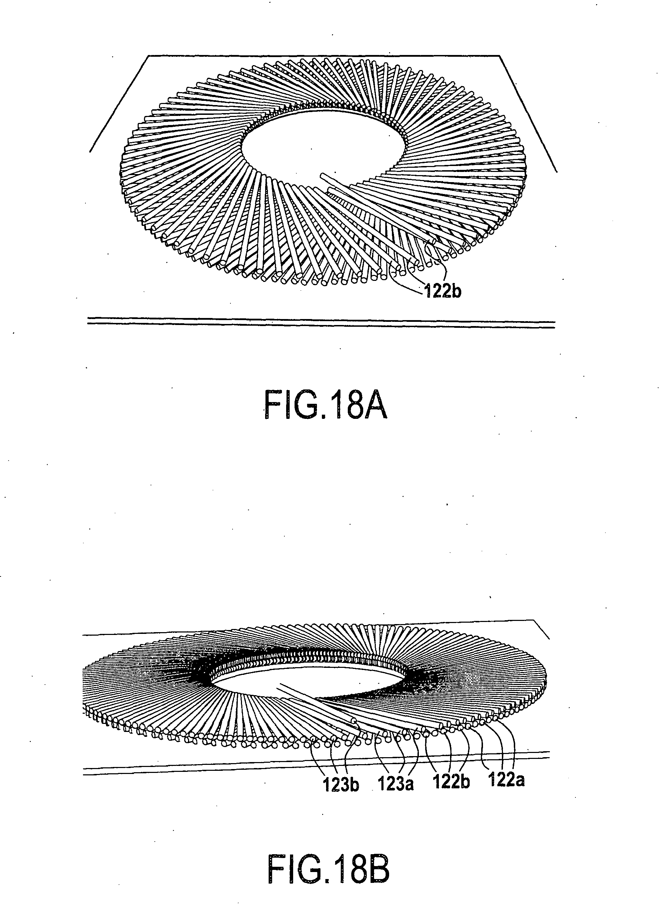

Comme illustré sur la figure 18A, la machine à broder dispose ensuite une série de fibres 122b suivant l'angle -α sur la série de fibres 122a et 123a. Des fibres supplémentaires 123b sont ensuite ajoutées pour combler les espaces présents entre les fibres 122b (figure 18B).

Ces étapes sont éventuellement répétées pour former plusieurs séries de fibres superposées et disposées respectivement suivant l'angle -α et α.

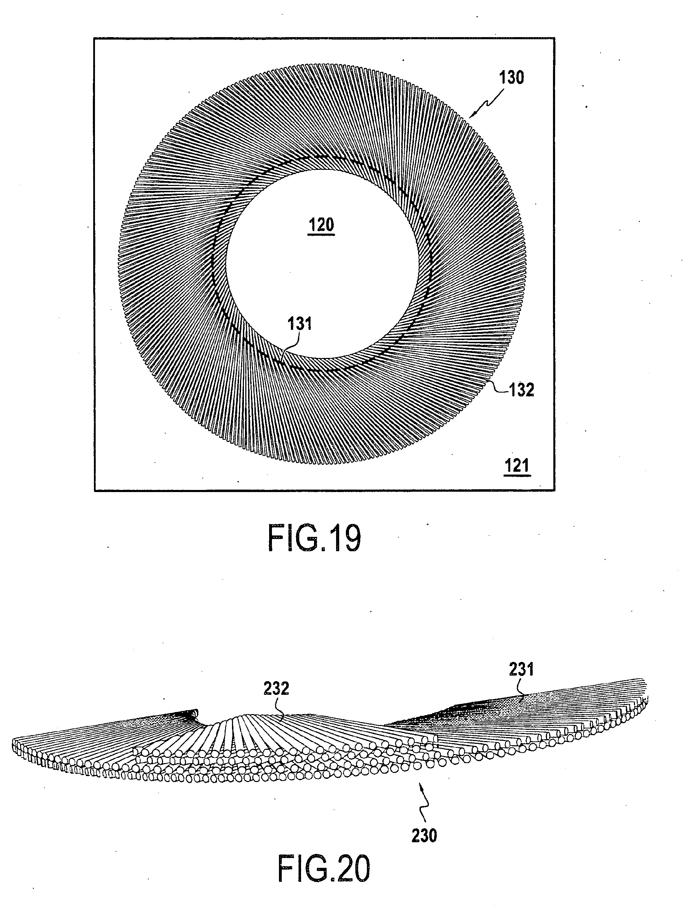

Après avoir réalisé une couture circulaire 131 au voisinage de la périphérie interne de l'espace annulaire et découpé la partie située entre les deux canevas, on obtient alors une strate fibreuse 130 (figure 19) dont les fibres 132 sont maintenues entre elles par la couture circulaire 131 tout en conservant une grande souplesse, ce qui permet de la positionner facilement sur un outillage ou dans un moule présentant une forme de révolution et de surface non développable.

Le renfort fibreux de la pièce à réaliser peut être constitué d'une seule strate 130 ou d'un empilement de plusieurs de ces strates, chacune réalisée à partir de deux canevas comme décrit précédemment. Dans le cas d'un empilement, les strates fibreuses 130 peuvent être liées entre elles par un fil traversant les couches dans le sens de leur épaisseur (sens Z) comme pour la liaison réalisée entre les strates 30 et 50 sur la figure 13.

Selon un aspect particulier de l'invention, il est possible de former des strates fibreuses comportant des zones plus épaisses formant des renforts locaux dans la pièce finale. La figure 20 montre une strate fibreuse 230 comprenant une strate fibreuse 231 formée de deux séries de fibres orientés respectivement suivant des angles α et -α comme décrit précédemment. La strate fibreuse 231 comprend en outre une portion 232 réalisée par superposition répétée de fibres cousues. La portion 232 est réalisée en programmant la machine à broder automatique pour qu'elle répète dans une zone déterminée le placement et la couture de fibres créant ainsi une ou plusieurs portions plus épaisses sur la strate fibreuse. On obtient ainsi des strates fibreuses comprenant localement une ou plusieurs portions d'épaississement permettant de fabriquer des pièces de révolution comportant des parties renforcées.

Une fois le renfort fibreux formé d'une ou plusieurs couches fibreuses 130 et comprenant éventuellement des portions de renfort 232, on procède au moulage de la pièce en imprégnant le renfort avec une résine thermodurcissable que l'on polymérise par traitement thermique. Comme pour la fabrication de l'armature pour butée flexible décrite précédemment, on utilise le procédé bien connu de moulage par transfert dit RTM ("Resine Transfert Moulding"). Conformément à ce procédé, on place le renfort fibreux dans un moule de préférence métallique puis on injecte dans celui-ci une résine thermodurcissable sous pression. La résine peut être, par exemple, une résine cyanate ester de classe de température 250 °C (température maximale supportée par la résine sans perte de caractéristiques). Les résines adaptées pour le procédé RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Elle peut éventuellement subir un cycle de post-cuisson pour améliorer ses caractéristiques thermomécaniques (augmentation de la température de transition vitreuse). Au final, la pièce est détourée pour enlever l'excès de résine et les chanfreins sont usinés. Aucun autre usinage n'est nécessaire puisque, la pièce étant moulée, elle respecte les cotes exigées.

## Revendications

1. Procédé de réalisation d'une strate fibreuse (30) destinée à former une préforme de pièce composite de révolution et de surface non développable, **caractérisé en ce qu'**il comprend les étapes consistant à:
- définir un espace annulaire (23) avec un premier et un second canevas (20, 21) délimitant respectivement une périphérie interne et une périphérie externe,
- disposer des fibres (22) entre les canevas (20, 21) en plaçant les fibres dans l'espace annulaire suivant au moins une direction et en maintenant lesdites fibres sur les canevas par couture,
- réaliser une couture circulaire de liaison (31) au voisinage de la périphérie interne de l'espace annulaire (23), et
- découper la strate fibreuse (30) ainsi formée dans l'espace annulaire (23) pour l'extraire des canevas.

2. Procédé selon la revendication 1, **caractérisé en ce que** des fibres supplémentaires (27) sont ajoutées pour combler les espaces libres présents entre les fibres (20) disposées entre les deux canevas (20, 21), les fibres étant fixées aux fibres adjacentes par couture.

3. Procédé selon la revendication 1 ou 2, **caractérisé en ce que** les fibres (20, 27) sont des fibres de carbone ou des fibres de verre.

4. Procédé selon l'une quelconque des revendications 1 à 3, **caractérisé en ce que** les fibres (20, 27) sont disposées et cousues par une machine à broder automatique.

5. Procédé de fabrication d'un renfort fibreux (80) pour armature composite de butée flexible comprenant la formation d'une préforme alternant au moins deux strates fibreuses (30, 50) **caractérisé en ce que** la première strate (30) est réalisée conformément au procédé selon l'une quelconque des revendications 1 à 4, et **en ce que** la deuxième strate (50) est réalisée en disposant sur la première strate, maintenue en forme sur un outillage sphérique (40), une strate de fibres orientées perpendiculairement aux fibres de la première strate.

6. Procédé selon la revendication 5, **caractérisé en ce que** la deuxième strate (50) est réalisée par bobinage filamentaire sur la première strate (30).

7. Procédé selon la revendication 5 ou 6, **caractérisé en ce que** les strates (30, 50) du renfort fibreux (80) sont liées entre elles par des fils (64).

8. Procédé de fabrication d'une armature pour butée flexible **caractérisé en ce qu'**il comprend la fabrication d'un renfort fibreux (80) conformément au procédé selon l'une quelconque des revendications 5 à 7 et **en ce que** le renfort fibreux (80) est placé dans un moule (70) dans lequel est injecté sous pression une résine thermodurcissable (71), la polymérisation de la résine étant ensuite réalisée par traitement thermique.

9. Procédé selon la revendication 8, **caractérisé en ce que** la résine (71) est une résine époxyde.

10. Procédé de fabrication de butée flexible formée d'une structure lamifiée comprenant une pluralité d'armatures rigides intercalées avec des couches en matériau élastiquement déformable **caractérisé en ce que** chaque armature est réalisée conformément au procédé selon la revendication 8 ou 9.

11. Procédé selon la revendication 10, **caractérisé en ce que** les couches en matériau élastique sont composés d'élastomère ou de caoutchouc et **en ce que** la structure lamifiée est soumise à un traitement thermique pour vulcaniser l'élastomère ou le caoutchouc.

12. Procédé de fabrication de butée flexible formée d'une structure lamifiée comprenant une pluralité d'armatures rigides intercalées avec des couches en matériau élastiquement déformable **caractérisé en ce qu'**il comprend les étapes consistant à:
- réaliser plusieurs renforts fibreux (80) de taille croissante conformément au procédé selon l'une quelconque des revendications 5 à 7,
- maintenir les renforts les uns dans les autres avec des intercalaires entre chaque armature, lesdits intercalaires définissant l'épaisseur des couches de matériau élastiquement déformable,
- injecter sous pression dans les renforts une résine thermodurcissable,
- appliquer un traitement thermique pour polymériser la résine dans chaque renfort de manière à former une pluralité d'armatures composites rigides,
- retirer les intercalaires, et
- injecter ou couler un matériau élastique dans les espaces présents entre les armatures composites rigides pour former entre elles des couches de matériau élastique.

13. Procédé selon la revendication 10, **caractérisé en ce que** les couches en matériau élastique sont composés d'élastomère et **en ce que** la structure lamifiée est soumise à un traitement thermique pour vulcaniser l'élastomère.

14. Procédé de fabrication d'une pièce composite de type carter comprenant la formation d'un renfort fibreux composé d'au moins une strate fibreuse (130) **caractérisé en ce que** ladite strate est réalisée conformément au procédé selon l'une quelconque des revendications 1 à 4 et **en ce qu'**elle est formée de fibres (122a, 122b) orientées suivant deux directions différentes.

15. Procédé selon la revendication 14, **caractérisé en ce qu'**une ou plusieurs portions d'épaississement (232) sont formées à des endroits déterminés sur chaque strate fibreuse (231), lesdites portions étant réalisées en répétant le placement de fibres aux endroits déterminés sur la strate.

16. Procédé selon la revendication 14 ou 15, **caractérisé en ce que** le renfort est placé dans un moule dans lequel est injecté une résine thermodurcissable, la polymérisation de la résine étant ensuite réalisée par traitement thermique.

17. Procédé selon la revendication 16, **caractérisé en ce que** la résine est une résine cyanate-ester.

## Claims

1. A method of making a fiber ply (30) for forming a preform of a composite part in the form of a body of revolution having a non-developable surface, the method being **characterized in that** it comprises the steps consisting in:
■ defining an annular space (23) with first and second canvases (20, 21) respectively defining an inner periphery and an outer periphery thereof;
■ placing fibers (22) between the canvases (20, 21) by placing the fibers in the annular space in at least one direction and by holding said fibers on the canvases by stitching;
■ implementing circular connection stitching (31) in the vicinity of the inner periphery of the annular space (23); and
■ cutting out the fiber ply (30) as made in this way in the annular space (23) in order to extract it from the canvases.

2. A method according to claim 1, **characterized in that** additional fibers (27) are added to fill in the empty gaps present between the fibers (20) placed between the two canvases (20, 21), the additional fibers being secured to the adjacent fibers by stitching.

3. A method according to claim 1 or claim 2, **characterized in that** the fibers (20, 27) are carbon fibers or glass fibers.

4. A method according to any one of claims 1 to 3, **characterized in that** the fibers (20, 27) are put into place and stitched by an automatic embroidery machine.

5. A method of fabricating fiber reinforcement (80) for a composite strength member of a flexible abutment, the method comprising forming a preform by alternating at least two fiber plies (30, 50) and being **characterized in that** the first ply (30) is made in accordance with the method according to any one of claims 1 to 4, and **in that** the second ply (50) is made by placing on the first ply, while held in shape on a spherical tool (40), a ply of fibers that are oriented perpendicularly to the fibers of the first ply.

6. A method according to claim 5, **characterized in that** the second ply (50) is made by filamentary winding on the first ply (30).

7. A method according to claim 5 or claim 6, **characterized in that** the plies (30, 50) of fiber reinforcement (80) are bonded together by threads (64).

8. A method of fabricating a strength member for a flexible abutment, the method being **characterized in that** it comprises fabricating fiber reinforcement (80) in accordance with the method according to any one of claims 5 to 7, and **in that** the fiber reinforcement (80) is placed in a mold (70) into which a thermosetting resin (71) is injected under pressure, the resin subsequently be polymerized by heat treatment.

9. A method according to claim 8, **characterized in that** the resin (71) is an epoxy resin.

10. A method of fabricating a flexible abutment made up of a laminated structure comprising a plurality of rigid strength members interleaved with layers of elastically deformable material, the method being **characterized in that** each strength member is made in accordance with the method according to claim 8 or claim 9.

11. A method according to claim 10, **characterized in that** the layers of elastic material are made up of elastomer or of rubber, and **in that** the laminated structure is subjected to heat treatment to vulcanize the elastomer or the rubber.

12. A method of fabricating a flexible abutment made up of a laminated structure comprising a plurality of rigid strength members interleaved with layers of elastically deformable material, the method being **characterized in that** it comprises the steps consisting in:
■ making a plurality of fiber reinforcements (80) of increasing size in application of the method according to any one of claims 5 to 7;
■ holding the reinforcements in one another by means of spacers between adjacent strength members, said spacers defining the thicknesses of the layers of elastically deformable material;
■ injecting a thermosetting resin under pressure into the reinforcements;
■ applying heat treatment to polymerize the resin in each reinforcement so as to form a plurality of rigid composite strength members;
■ removing the spacers; and
■ injecting or casting an elastic material into the spaces present between the rigid composite strength members in order to form layers of elastic material between them.

13. A method according to claim 10, **characterized in that** the layers of elastic material are made of elastomer and **in that** the laminated structure is subjected to heat treatment to vulcanize the elastomer.

14. A method of fabricating a composite part of the casing type, the method comprising forming a fiber reinforcement made up of at least one fiber ply (130), and being **characterized in that** said plies made in application of the method according to any one of claims 1 to 4, and **in that** it is made up of fibers (122a, 122b) oriented in two different directions.

15. A method according to claim 14, **characterized in that** one or more thickener portions (232) are formed at determined locations on each fiber ply (231), said portions being made by repeatedly placing fibers at determined locations on the ply.

16. A method according to claim 14 or claim 15, **characterized in that** the reinforcement is placed in a mold into which a thermosetting resin is injected, the resin subsequently being polymerized by heat treatment.

17. A method according to claim 16, **characterized in that** the resin is a cyanate-ester resin.

## Patentansprüche

1. Verfahren zur Herstellung einer Faserlage (30), die dazu bestimmt ist, einen Vorformling eines Verbundrotationsteils mit nicht abwickelbarer Fläche zu bilden, **dadurch gekennzeichnet, daß** es die Schritte umfaßt, die darin bestehen:
- mit einem ersten und einem zweiten Rahmen (20, 21), die einen Innenumfang bzw. einen Außenumfang begrenzen, einen ringförmigen Raum (23) zu definieren,
- Fasern (22) zwischen den Rahmen (20, 21) anzuordnen, wobei die Fasern in dem ringförmigen Raum entlang wenigstens einer Richtung verlegt und die Fasern durch Festnähen an den Rahmen gehalten werden,
- eine Verbindungskreisnaht (31) in der Nähe des Innenumfangs des ringförmigen Raums (23) herzustellen, und
- die auf diese Weise in dem ringförmigen Raum (23) gebildete Faserlage (30) zu schneiden, um sie aus den Rahmen herauszunehmen.

2. Verfahren nach Anspruch 1, **dadurch gekennzeichnet, daß** zusätzliche Fasern (27) hinzugefügt werden, um die Freiräume zwischen den zwischen den beiden Rahmen (20, 21) angeordneten Fasern (20) auszufüllen, wobei die Fasern an den benachbarten Fasern festgenäht werden.

3. Verfahren nach Anspruch 1 oder 2, **dadurch gekennzeichnet, daß** die Fasern (20, 27) Kohlenstoffasern oder Glasfasern sind.

4. Verfahren nach einem der Ansprüche 1 bis 3, **dadurch gekennzeichnet, daß** die Fasern (20, 27) mittels eines Stickautomaten angeordnet und genäht werden.

5. Verfahren zur Herstellung einer Faserverstärkung (80) für eine Verbundbewehrung eines flexiblen Anschlags, umfassend die Ausbildung eines Vorformlings mit abwechselnd wenigstens zwei Faserlagen (30, 50), **dadurch gekennzeichnet, daß** die erste Lage (30) entsprechend dem Verfahren nach einem der Ansprüche 1 bis 4 hergestellt wird, und daß die zweite Lage (50) **dadurch** hergestellt wird, daß auf der ersten Lage, die an einem kugelförmigen Werkzeug (40) in Form gehalten wird, eine Lage aus senkrecht zu den Fasern der ersten Lage ausgerichteten Fasern angeordnet wird.

6. Verfahren nach Anspruch 5, **dadurch gekennzeichnet, daß** die zweite Lage (50) durch Fadenwickeln auf der ersten Lage (30) ausgebildet wird.

7. Verfahren nach Anspruch 5 oder 6, **dadurch gekennzeichnet, daß** die Lagen (30, 50) der Faserverstärkung (80) durch Fäden (64) miteinander verbunden sind.

8. Verfahren zur Herstellung einer Bewehrung für einen flexiblen Anschlag, **dadurch gekennzeichnet, daß** es die Herstellung einer Faserverstärkung (80) entsprechend dem Verfahren nach einem der Ansprüche 5 bis 7 umfaßt und daß die Faserverstärkung (80) in einer Form (70) angeordnet wird, in die ein warmhärtbares Harz (71) unter Druck eingespritzt wird, wobei die Polymerisation des Harzes anschließend durch Wärmebehandlung vollzogen wird.

9. Verfahren nach Anspruch 8, **dadurch gekennzeichnet, daß** das Harz (71) ein Epoxydharz ist.

10. Verfahren zur Herstellung eines flexiblen Anschlags, der von einer Schichtstruktur gebildet ist, die eine Vielzahl von starren Bewehrungen umfaßt, zwischen denen Schichten aus elastisch verformbarem Material eingefügt sind, **dadurch gekennzeichnet, daß** jede Bewehrung entsprechend dem Verfahren nach Anspruch 8 oder 9 ausgebildet ist.

11. Verfahren nach Anspruch 10, **dadurch gekennzeichnet, daß** die Schichten aus elastischem Material aus Elastomer oder Kautschuk bestehen und daß die Schichtstruktur einer Wärmebehandlung unterzogen wird, um das Elastomer oder den Kautschuk zu vulkanisieren.

12. Verfahren zur Herstellung eines flexiblen Anschlags, der von einer Schichtstruktur gebildet ist, die eine Vielzahl von starren Bewehrungen umfaßt, zwischen denen Schichten aus elastisch verformbarem Material eingefügt sind, **dadurch gekennzeichnet, daß** es die Schritte umfaßt, die darin bestehen:
- mehrere Faserverstärkungen (80) zunehmender Größe entsprechend dem Verfahren nach einem der Ansprüche 5 bis 7 auszubilden,
- die Verstärkungen mit Zwischenstücken zwischen jeder Bewehrung ineinander zu halten, wobei die Zwischenstücke die Dicke der Schichten aus elastisch verformbarem Material festlegen,
- in die Verstärkungen ein warmhärtbares Harz unter Druck einzuspritzen,
- eine Wärmebehandlung anzuwenden, um das Harz in jeder Verstärkung zu polymerisieren, so daß eine Vielzahl starrer Verbundbewehrungen gebildet wird,
- die Zwischenstücke herauszunehmen, und
- ein elastisches Material in die zwischen den starren Verbundbewehrungen vorhandenen Räume einzuspritzen oder zu gießen, um zwischen ihnen Schichten aus elastischem Material zu bilden.

13. Verfahren nach Anspruch 10, **dadurch gekennzeichnet, daß** die Schichten aus elastischem Material aus Elastomer bestehen und daß die Schichtstruktur einer Wärmebehandlung unterzogen wird, um das Elastomer zu vulkanisieren.

14. Verfahren zur Herstellung eines Verbundteils vom Typ Gehäuse, umfassend die Bildung einer aus wenigstens einer Faserlage (130) bestehenden Faserverstärkung, **dadurch gekennzeichnet, daß** die Lage entsprechend dem Verfahren nach einem der Ansprüche 1 bis 4 hergestellt wird und daß sie von entlang zweier unterschiedlicher Richtungen ausgerichteten Fasern (122a, 122b) gebildet ist.

15. Verfahren nach Anspruch 14, **dadurch gekennzeichnet, daß** ein oder mehrere Verdickungsabschnitt(e) (232) an bestimmten Stellen auf jeder Faserlage (231) ausgebildet sind, wobei die Abschnitte durch wiederholtes Anordnen von Fasern an den bestimmten Stellen auf der Lage ausgebildet werden.

16. Verfahren nach Anspruch 14 oder 15, **dadurch gekennzeichnet, daß** die Verstärkung in eine Form eingebracht wird, in die ein warmhärtbares Harz eingespritzt wird, wobei die Polymerisation des Harzes anschließend durch Wärmebehandlung vollzogen wird.

17. Verfahren nach Anspruch 16, **dadurch gekennzeichnet, daß** das Harz ein Cyanatesterharz ist.
